# EUROPEAN PATENT SPECIFICATION

(11) **EP 2 577 116 B1**
(45) Date of publication and mention of the grant of the patent: **09.08.2017**
(21) Application number: 11729368.8
(22) Date of filing: 01.06.2011
(51) Int. Cl.: F16J 9/06, F16J 9/20

(54) **OIL CONTROL RING OF FERROUS BODY FOR INTERNAL COMBUSTION ENGINES**
ÖLABSTREIFRING EINES ESIENKÖRPERS FÜR VERBRENNUNGSMOTOREN
SEGMENT RACLEUR D'HUILE CONSTITUÉ D'UN CORPS FERREUX DESTINÉ À DES MOTEURS À COMBUSTION INTERNE

(30) Priority: 04.06.2010 BR PI1003187
(43) Date of publication of application: 10.04.2013
(73) Proprietor: Mahle International GmbH, 70376 Stuttgart (DE); Mahle Metal Leve S/A, 13210-877 Jundiaí, SP (BR)
(72) Inventor: RABUTÉ, Rémi Daniel, F-95600 Eaubonne (FR); SILVA, Davi Antônio da, 02045-070 Sao Paulo (BR)
(74) Representative: BRP Renaud & Partner mbB Rechtsanwälte Patentanwälte Steuerberater
(86) International application number: PCT/EP2011/002716
(87) International publication number: WO 2011/151069

(56) References cited:
- WO-A1-01/53727
- WO-A1-03/019050
- WO-A1-2010/124353
- JP-A- 2005 291 003
- JP-A- 2007 170 455
- US-A- 4 247 972
- US-A- 5 820 131
- US-B1- 6 199 274

## Description

The present invention refers to an oil control ring formed by a ferrous body idealized for internal combustion engines that allows the maintenance of appropriate levels of contact pressure, even under reduced expanding loads due to the use of profile that offers reduced contact of the ring with the interface of the cylinder.

Additionally, it offers better dynamic stability and the consequent distribution of the contact pressure of the set. It also allows the application of surface hardening treatments in oil rings with reduced contact surfaces, through its different geometry, offering construction, handling and operation robustness.

### Description of the State of the Art

The internal combustion engines are mechanisms that transform energy used by the great majority of automotive vehicles, and they basically include two main parts: the engine block and one or more cylinder head(s). On the base of the cylinder head(s) are the combustion chambers (in diesel engines in general the combustion chambers are in the piston heads) and in the engine block we find the cylinders and the set of the crankshaft. The set of the crankshaft is composed of pistons, connecting rods and by the crankshaft.

The engine converts the energy produced by the combustion of the mixture (fuel and air) in the combustion chambers, into mechanic energy capable of giving movement to the wheels.

Since the driving force necessary to move the automobile comes from burning the air/fuel mixture in the combustion chamber, and in order to guarantee a homogeneous combustion without burning oil and also avoid the excessive passage of gases from the cylinder to the pan, it is necessary to use rings to offer a good sealing of the backlash that exists between the piston and the cylinder wall.

Normally, engine designers use three rings, in that two are compression rings, positioned more adjacently to the piston head, and one oil ring, positioned more to the opposite direction. The compression rings' function is to stop the passage of the combustion gases to the interior of the pan, and the oil ring's function is to scrape the excess of oil from the cylinder wall and take it back to the pan.

Another important function of the rings is to be used as a bridge to transmit heat from the piston to the cylinder wall/liner where the dissipation of heat occurs through the engine cooling system.

The oil rings can be composed of one, two or three pieces, and the most commonly used type in internal combustion engines are the ones with two or three pieces.

As main characteristics, the one-piece ring uses the elastic properties inherent to the base material in order to meet the expansion force requested for the application, whereas the two-piece ring includes basically a body and an elastic element and the three-piece ring includes basically a support body and two segments of ring to meet the same purpose.

Currently, the oil rings found in the prior art have slits or holes distributed along the peripheral transversal section of the body. These slits or holes have the function to drain the excess of oil accumulated between the two external work faces of the ring and increase its flexibility by means of the reduction of rigidness of the transversal section that contains the slits, offering more conformity of the piece/set with the cylinder wall.

However, the automotive industry currently has been guided by the challenge of meeting environmental regulations that are more and more restrict, resulting in developments more and more guided by the search for lower frictions and smaller, energetically more efficient engines.

Also following these trends of reduction of attrition in the operation of the engine, the main contribution of the rings is the reduction of the load necessary to offer the sufficient pressure against the cylinder wall(s) of the engine.

In more details, it is possible to obtain the maintenance of an appropriate contact pressure in the ring/cylinder interface, reducing the area of contact of the ring, even under the action of reduced expansion loads. However, difficulties regarding the manufacturing, handling of pieces and even an occasional breaking during the work are some obstacles that must be overcome in projects that aim at reducing the area of contact of the oil control rings.

Also, the improvement in the operations of reconditioning and burnishing of the cylinders, associated with the low load rings, can lead to an increased time of operation of the engine for the "breaking in" of the pieces. The breaking in period is necessary because, although there is a lot of care in the production of coinciding parts, the variability that is inherent to the production and the deformities of operation of the engine require some wearing before matching the sliding surfaces of the piece. The consumption of lubrication oil in this phase is higher until the appropriate adjustment is reached.

The ring defined in the Brazilian patent application PI 9202268 tries to solve the problem of reduction of contact area by using truncated conical contact surfaces. Additionally, the referred ring presents good behavior during the breaking-in phase of the engine, since the very high contact pressure that occurs in the first operation hours helps stabilize the consumption of engine oil.

As for patent US 7,117,594, it tries to solve the problem mentioned above by using a profile of a stepped contact surface, in the shape of steps. The proposal on the one hand shows a certain efficiency since it allows a higher constructive robustness to the region of the projections of contact of the ring. However, on the other hand, there is the possibility of occurrence of storage of oil in the stepped region of the projections of contact of the ring, increasing, therefore, the consumption of oil of the vehicle driving set.

Another document worth mentioning is the North-American patent application US2006/0006604, which brings an oil ring whose projections of contact end in a bulged shape, which brings as its main result the reduction of the attrition to the movement against the associated cylinder wall and the significant reduction of the oil consumption during the operation.

However, this type of ring has as an unfavorable characteristic the expensive manufacturing process in order to obtain the referred bulged profile in the projections of contact. Also WO03/019050 A1 discloses an example of an oil control ring for internal combustion engines, formed by a ferrous body including two projections of contact, each one defining a respective external contact surface which contains a first and a second extremity edges and each one having a tilted face which starts from the second the respective edge, each contact surface has a distance between the first and second extremity edges between 0.18 and 0.30 milimeter and the angle of each tilted face is included between 70 and 94 degrees with respect to the axial length of the ring. Therefore, we can note that an oil control ring capable of maintaining appropriate levels of contact pressure still has not been developed, even under low loading due to the use of profile that enables reduced contact of the ring with the interface of the cylinder and that offers constructive, handling and operation robustness.

### Objectives of the Invention

A first objective of the present invention is to propose an oil control ring which, by using the peripheral face of work with reduced contact surface, allows a better distribution of the pressure, guaranteeing an appropriate thickness of the oil pellicle between the cylinder ring and wall and enabling the reduction of the loading given by the expanding force of ring project (and, therefore, the corresponding reduction of power dissipated by friction).

Also, an objective of the present invention is to propose an oil control ring where the use of profile of peripheral face of work with reduced contact surface, associated with the use of higher conical angle of the face of contact against the internal cylinder wall aims at minimizing the effect of radial wearing on the increase of the axial width of the face of contact, offering, therefore, the maintenance of the pressure of project and consequently the control of the oil pellicle between the cylinder ring and wall during the service life of the engine.

Another an objective of the present invention is the possibility of being applied together with various types of surface treatments and covers, because given its constructive and handling robustness, it significantly reduces the chances of breaking and cracks during the operation and even the phases of assembly and disassembly of the ring in the piston and the piston in the cylinder.

### Brief Description of the Invention

The goals of this invention are met by an oil control ring according to claim 1. In order to increase the robustness of the product regarding the sealing, a solution brought by this invention is the possibility of a higher 21 radial removal during the lapping operation, without significant increase of the contact range, given the higher conical angle of the profile. When in operation, the flat part of the ring guarantees an appropriate contact range and minimizes the risk of chipping that could occur if the vertex were maintained.

Also, another benefit of this invention is the possibility of enabling the use of reduced contact surfaces in oil rings with the use of surface hardening treatments of the contact surface in order to make the product more resistant to wearing, such as, for example, nitriding. In the descriptions found in the prior art, the use of this technology on reduced contact surfaces can result in high levels of located tension because the relation between the thickness of the hardened layer and the contact portion is approximately unitary.

The characteristics mentioned above, in addition to other aspects of this invention, shall be better understood by means of the examples and the detailed description of the figures below.

### Brief Description of the Drawings

The present invention will now be described in greater detail, with reference to the appended drawings, wherein:
Figure 1 - is a view of the transversal section of an oil ring for internal combustion engines of the prior art;
Figure 2 - is a view of the profile of the stepped work face of an oil ring for internal combustion engines of the prior art;
Figure 3A - is a detailed view of the profile of the contact surface of a ring of the prior art;
Figure 3B - is a detailed view of the profile of the contact surface of the ring object of this invention;
Figure 4 - is a schematic view of the transversal section of the oil ring for internal combustion engines of this invention;
Figure 5 - is a detailed view of the profile of the preferred concretization of the contact surface of the ring of this invention;
Figure 6 - is a detailed view of the profile of an alternative concretization of the contact surface of the ring object of this invention;
Figure 7 - is a schematic representation of the high concentration of tensions in a ring of the prior art;
Figure 8 - is a schematic representation of the higher robustness brought by the profile of the ring object of this invention; and
Figure 9 - is a schematic view of the ring object of this invention in operation.

### Detailed Description of the Drawings

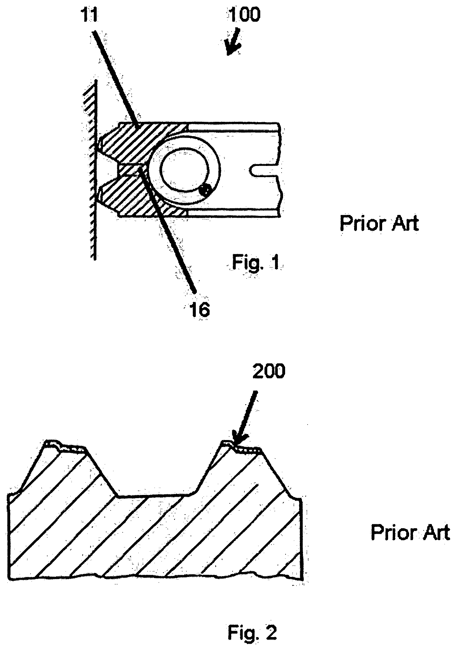

The Brazilian patent application P19202268 defines an oil control ring 100 that enables an efficient scraping of oil by means of the contact surface in the truncated conical shape 11. It also brings, as illustrated in figure 1, oblong rips 16 for the return of the oil to the engine pan.

Figure 2 represents the ring revealed by patent US 7,117,594, which brings, as solution for the reduction of contact face the use of a manufacturing technique that increases the constructive robustness of the contact surface by the stepping of the projection of contact (see the stepping, identified in figure 2 with reference 200). However, as compensation, this solution does not eliminate the possibility or probability of occurrence of storage of oil in the stepped region of the projections of contact of the ring, increasing, therefore, the consumption of oil in the vehicle driving set.

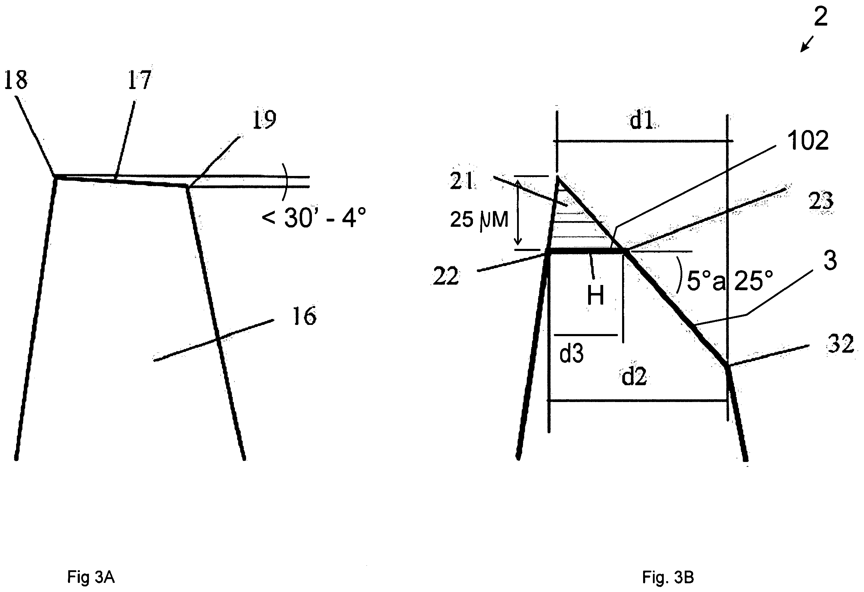

As can be seen in figure 3A, a general ring belonging to the prior art has the profile of the contact surface 16 with a slightly tilted face 17 (between 30' and 4°), where such configuration allows only a precise contact on edge 18 with the cylinder wall, bringing high pressure in the phase of engine breaking-in.

However, this high pressure can in some situations cause the rupture and consequently damage the cylinder wall, in addition to being more susceptible to the increase of the contact region due to the radial wearing.

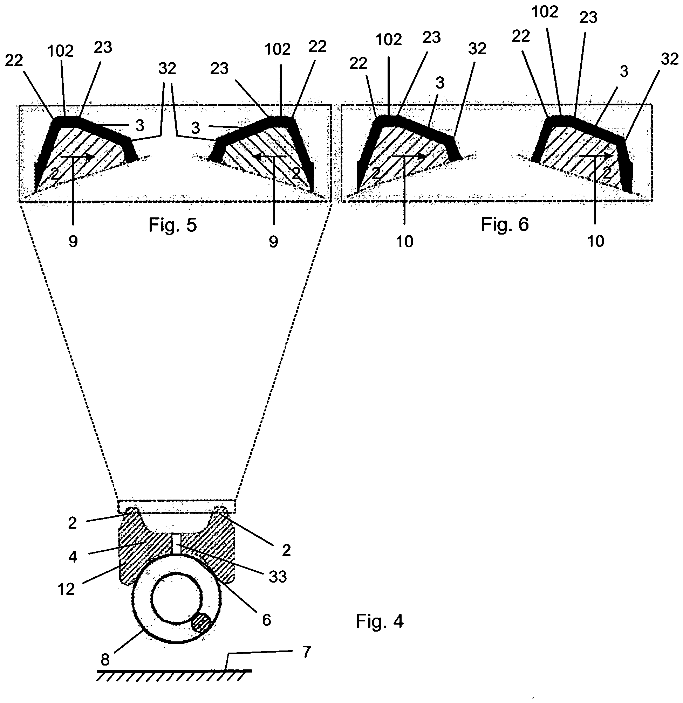

According to a preferred concretization and as can be seen from figure 4, the oil control ring 1 object of this invention is formed by a preferably ferrous body 12, such as cast iron or any steel, such as nitrided steel, and by a resilient/elastic element 8, such as an helicoidal spring, flat spring or even another expanding means, to bring the expansion force necessary to this type of application.

Alternatively, it is possible to conceive a ring in which the own mechanical properties/characteristics of the base material of the body 12 are sufficient to generate the expansion force desired. Also, alternatively, it is possible to conceive a body 12 which is not ferrous, such as, for example, constituted by non-metallic material, polymer or compound.

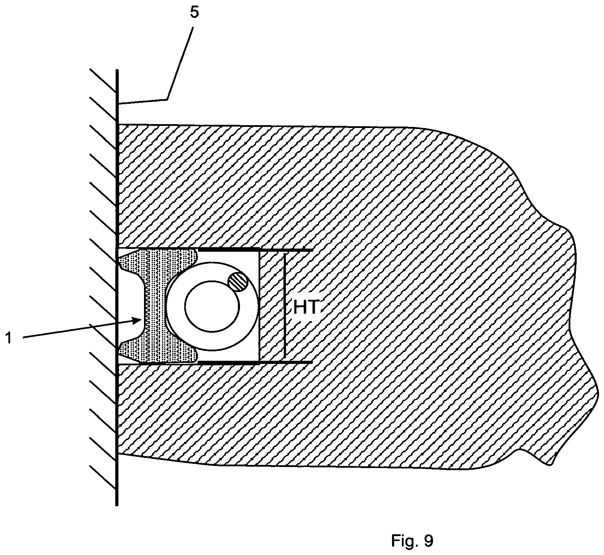

Preferably, the body 12 has total height (illustrated especially in figure 9 as HT) above 2 millimeters (mm) taken in the axial direction, in order to offer a little more rigidness, although it is perfectly possible to conceive a ring included in the scope of protection of this invention whose body has height below 2 mm.

Body 12, regardless of its HT height being above or below 2 mm, it has two external projections of contact 2 each one containing an extreme triangular region 21 (which is illustrated with hachure in figure 3B, but will be later removed in a process of final lapping), a segment of triangular trunk (which gives the form to the projection of contact 2 itself after the removal of the external triangular region) bordered by a parallel face or surface of contact 102 and a tilted face 3, an intermediary section 4 directed at the cylinder wall 5 and a circular section 6 turned to the side of the piston 7. As can be seen in figure 9, the projections 2 project towards the cylinder wall 5 when the set is assembled.

As can also be seen in figure 3B, each projection of contact 2 of the oil control ring 1 contains a first 22 and second 23 extremity edges, and brings initially a distance d3, also identified as the height (H), formed from edge 22 to edge 23, where the tilted face 3 starts. This distance corresponds, as we will see below, exactly to the parallel surface of contact 102.

The angle of the tilted face 3 must be included between 5°and 25° (degrees), preferably between 13° and 17° in relation to the axial length of the ring, which maximizes its performance properties.

One of the possible processes to use in order to manufacture the ring object of this invention uses as base a metallic annular segment of rectangular transversal section, and the two projections of contact 2 are created by means of removing material from the region between both. However, alternatively, it is possible to use for the manufacturing of the oil ring a metallic tape whose transversal section already brings the projections 2 (pre-profiled), making the procedure of removing material unnecessary.

After the projections of contact 2 have been obtained, the triangular extremity 21 is removed so that the ring reaches its final format, by lapping the contact face or even any other similar process.

The removal of the triangular extremity 21 of each projection of contact 2 defines the contact face 102 in the flat form, parallel to the cylinder wall, with the height (H) which may vary from 0.02 to 0.20 millimeter, being preferred, but not mandatorily, with 0.20 millimeter or a close value.

Alternatively, if using a steel tape or another material already with the desired profile (pre-profiled), that is, without the triangular extremity 21 in each projection, the need of removal is eliminated.

The suppression of the triangular extremity 21 guarantees both the stability regarding the breaking or cracks in the region, and the maintenance of a more constant contact pressure during the service life of the equipment.

Figure 4 illustrates the transversal section of a preferred concretization of the oil ring 1 of this invention.

Figures 5 and 6 illustrate the detail of the contact surfaces 102 of the ring 1 of this invention. In figure 5, which illustrates a preferred concretization of the invention, the projections of contact 2 are turned so that the tilted faces 3 are turned one facing the other, that is, symmetrical, according to the direction indication 9.

This first concretization is preferred, mainly when one focus on the solution of the problem of irregular contact between the superior and inferior projection of contact of the oil ring (that is, different, the contact of a projection being higher than the other), which may occur (and in practice does occur) due to the deformation of the small channel of the piston, of the axial movement of the piston, given by the backlash between the piston/cylinder pair and the movement of the gravity center of the rings due to the singularity added to the portions of contact of the ring, when the two projections of contact are directed.

The position of the projections of contact 2 (and as a consequence of the contact surfaces 102), in a way that the respective tilted faces 3 are turned one facing the other, collaborates in a decisive manner so that the characteristics of stability and geometric counterbalancing of the ring are such that the contact of both contact surfaces are significantly uniform, even in situations of high dynamic requesting of the ring, resulting in the improved axial conformity of the oil ring.

In another possible concretization, illustrated in figure 6, the two projections of contact 2 are positioned in an asymmetrical manner, that is, directed so that the two tilted faces 3 are turned to the same direction, namely, the direction of the top of the piston, according to the indication of direction 10. This assembly focus on making feasible the reduction of viscous or hydrodynamic attrition, upon the operation of the piece; however the results obtained regarding the stability of the ring to avoid the irregular or different contact between the superior and inferior projection of contact and the cylinder become more dependent on the use of advanced manufacturing techniques, with reduced tolerances, mainly regarding the difference between the heights of the projections of contact, in order to minimize the impact of the already mentioned external effects, such as the deformation of the small channel and the axial movement of the piston.

The use of the profiles of surface of contact of the ring object of this invention, such as illustrated in figures 5 and 6, makes it possible for the resulting ring to have a better performance in relation to the control of the oil film, avoiding a problem found in the rings of the prior art, in which the stepped profile of the contact face 200 (see figure 2) acts as an oil accumulator, retaining it and causing its accumulation in the superior part of the oil ring (directed at the top of the piston). The concretization of the invention illustrated in figure 5 is especially efficient in this regard, given that it makes it possible to considerably minimize the occurrence of irregular contact between the superior and inferior projection of contact of the oil ring due to the fact that the tilted faces 3 are directed one facing the other, even in situation of high dynamic request of the ring.

Consequently, in addition to the decreased wearing of the ring and the cylinder wall, a considerable reduction occurs in the accumulation of lubricating oil in the superior part of the ring and it is better redistributed along its action field.

In order to reduce even further the accumulation of lubricant, the ring can include one or more areas to drain oil in the preferred form of oblong rips or holes 33 positioned in the intermediary section 4 in order to enable the flow of lubricant. Because it is a solution known to those with experience in this technique, there is no need for more details in the description. The existence of these oblong rips or holes 33 is more interesting, and preferred, when the height of the ring is above 2.0 mm, which maintains a still acceptable value of rigidness, but nothing stops them from being offered in a ring with lower height, if necessary or desired.

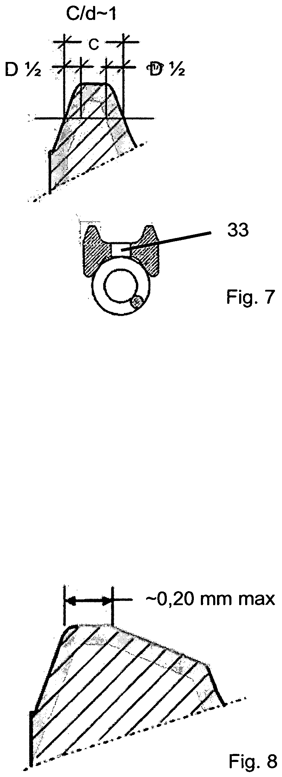

Figure 7 illustrates, in a schematic manner, the high concentration of tensions that occur in a ring of the prior art, by means of the relation between the contact width (c) and the thickness of the hardened layer (D/2), formed upon the application of superficial hardening treatments. This concentration of tensions is very considerable and makes it impossible to associate the application of the techniques of superficial hardening treatment in rings, such as, for example, nitriding, together with the reduction of the contact surfaces of the projections of contact, according to the designs presented by the rings belonging to the prior art, such as the ones illustrated in figures 1 and 2.

Figure 8, in turn, schematically illustrates in details one of the projections of contact 2 of the ring object of this invention, which, due to its geometry, offers reduction of the contact surface associated with obtuse constructive angles, which are gentler, minimizing the accumulation of tensions upon the application of superficial hardening treatments to reduce superficial wearing, such as nitriding, or localized processes of phase change of material, such as the hardening by laser.

Therefore, it is clear that the shape of the projections of contact 2 of the ring, object of this invention, makes its use possible with coatings and superficial treatments to increase the resistance to wearing in which the use of profiles with excessive reduction of the surface of contact, such as the rings belonging to the prior art, becomes restrictive, given the accumulation of tensions caused by the high superficial hardness brought by the coatings and superficial treatments, not to mention the other great advantage of the invention, commented above, which is the superior maintenance of the contact pressure along the service life of the engine since it has higher tilting angle of the edge that supports the contact face, making, therefore, the radial wearing have reduced effect on the increase of the contact face of the projections of contact of the oil ring.

Having described examples of preferred embodiments, it should be understood that the scope of the present invention encompasses other possible variations, being limited only by the content of the appended claims.

## Claims

1. Oil control ring (1) for internal combustion engines, formed by a ferrous body (12) including two projections of contact (2), each one defining a respective external contact surface (102) which contains a first (22) and second (23) extremity edges and each one having a tilted face (3) which starts from the respective second edge (23), each contact surface (102) has a distance (d3) between the first (22) and second (23) extremity edges between 0.02 and 0.20 millimeter and the angle of each tilted face (3) is included between 13 and 17 degrees with respect to the axial length of the ring.

2. Oil control ring according to claim 1, being **characterized by** the fact that the projections of contact (2) are directed, so that the respective tilted faces (3) are turned one facing the other, symmetrically, the inferior one directed at the top of the piston.

3. Oil control ring according to claim 1, being **characterized by** the fact that the projections of contact (2) are directed, so that the respective tilted faces (3) are turned to the same direction, at the top of the piston.

4. Oil control ring according to any of the preceding claims, **characterized by** the fact that it includes an intermediary section (4) which has areas to drain oil in the form of oblong rips or holes (33) positioned in order to make the flow of lubricant possible.

5. Oil control ring according to any of the claims 1 to 3, **characterized by** the fact that it includes a solid intermediary section (4), that is, it does not have oblong rips or holes (33).

6. Oil control ring according to any of the preceding claims, **characterized by** the fact that the projections of contact (2) are created by means of removing material from the region between both.

7. Oil control ring according to any of the claims 1 to 5, **characterized by** the fact that the projections of contact (2) are obtained by the use as an alternative form of a pre-profiled tape for manufacturing of the ring (1).

8. Oil control ring according to any of the preceding claims, **characterized by** the fact that the face (102) is obtained by the use of pre-profiled tape for manufacturing of the ring (1).

9. Oil control ring according to any of the claims 1 to 7, **characterized by** the fact that each face (102) is obtained by machining or similar process to remove material by pulling the material.

10. Oil control ring according to any of the preceding claims, **characterized by** the fact that the external surface of the ring receives application of coatings in order to increase the wear resistance of the ring (1).

11. Oil control ring according to any of the preceding claims, **characterized by** the fact that the external surface of the ring receives superficial treatment in order to increase the wear resistance of the ring (1).

12. Oil control ring according to any of the preceding claims, **characterized by** the fact that the ferrous body (12) has total height (HT) above 2 millimeters (mm).

## Patentansprüche

1. Ölsteuerring (1) für Brennkraftmaschinen, gebildet durch einen Eisenkörper (12) mit zwei Kontaktvorsprüngen (2), die jeweils eine entsprechende äußere Kontaktfläche (102) definieren, die eine erste (22) und eine zweite (23) Endkante enthält, und von denen jede eine von der entsprechenden zweiten Kante (23) ausgehenden Kippfläche (3) aufweist, wobei jede Kontaktfläche (102) einen Abstand (d3) zwischen der ersten (22) und der zweiten (23) Endkante zwischen 0,02 und 0,2 Millimetern aufweist und wobei der Winkel jeder Kippfläche (3) zwischen 13 und 17 Grad in Bezug auf die axiale Länge des Rings aufweist.

2. Ölsteuerring nach Anspruch 1, **gekennzeichnet durch** die Tatsache, dass die Kontaktvorsprünge (2) derart gerichtet sind, dass die entsprechenden Kippflächen (3) so gedreht werden, dass sie einander zugewandt sind, symmetrisch, wobei die Untergeordnete auf die Oberseite des Kolbens gerichtet ist.

3. Ölsteuerring nach Anspruch 1, **gekennzeichnet durch** die Tatsache, dass die Kontaktvorsprünge (2) derart gerichtet sind, dass die entsprechenden Kippflächen (3) in die gleiche Richtung gedreht werden, auf der Oberseite des Kolbens.

4. Ölsteuerring nach einem der vorstehenden Ansprüche, **gekennzeichnet durch** die Tatsache, dass er einen Zwischenabschnitt (4) aufweist, der Bereiche zum Ablassen von Öl in der Form von länglichen Rippen oder Löchern (33) aufweist, die angeordnet sind, um eine Strömung von Schmiermittel zu ermöglichen.

5. Ölsteuerring nach einem der Ansprüche 1 bis 3, **gekennzeichnet durch** die Tatsache, dass er einen massiven Zwischenabschnitt (4) aufweist, das heißt, er weist keine länglichen Rippen oder Löcher (33) auf.

6. Ölsteuerring nach einem der vorstehenden Ansprüche, **gekennzeichnet durch** die Tatsache, dass die Kontaktvorsprünge (2) mittels Entfernen von Material aus dem Bereich zwischen beiden geschaffen werden.

7. Ölsteuerring nach einem der Ansprüche 1 bis 5, **gekennzeichnet durch** die Tatsache, dass die Kontaktvorsprünge (2) durch das Verwenden als eine alternative Form eines vorprofilierten Bandes zur Herstellung des Rings (1) erhalten werden.

8. Ölsteuerring nach einem der vorstehenden Ansprüche, **gekennzeichnet durch** die Tatsache, dass die Stirnfläche (102) durch das Verwenden von vorprofiliertem Band zur Herstellung des Rings (1) erhalten wird.

9. Ölsteuerring nach einem der Ansprüche 1 bis 7, **gekennzeichnet durch** die Tatsache, dass jede Stirnfläche (102) durch maschinelles Bearbeiten oder einen ähnlichen Prozess zum Entfernen von Material durch Ziehen des Materials erhalten wird.

10. Ölsteuerring nach einem der vorstehenden Ansprüche, **gekennzeichnet durch** die Tatsache, dass die äußere Fläche des Rings das Aufbringen von Beschichtungen erhält, um die Verschleißfestigkeit des Rings (1) zu vergrößern.

11. Ölsteuerring nach einem der vorstehenden Ansprüche, **gekennzeichnet durch** die Tatsache, dass die äußere Fläche des Rings Oberflächenbehandlung erhält, um die Verschleißfestigkeit des Rings (1) zu vergrößern.

12. Ölsteuerring nach einem der vorstehenden Ansprüche, **gekennzeichnet durch** die Tatsache, dass der Eisenkörper (12) eine Gesamthöhe (HT) von über 2 Millimetern (mm) aufweist.

## Revendications

1. Segment racleur d'huile (1) pour moteurs à combustion interne, formé par un corps ferreux (12) incluant deux parties en saillie de contact (2), chacune définissant une surface de contact externe respective (102) qui contient un premier (22) et un second (23) bord d'extrémité et chacune ayant une face inclinée (3) qui démarre à partir du second bord respectif (23), chaque surface de contact (102) a une distance (d3) entre le premier (22) et le second (23) bord d'extrémité entre 0,02 et 0,20 millimètre et l'angle de chaque face inclinée (3) est inclus entre 13 et 17 degrés par rapport à la longueur axiale du segment.

2. Segment racleur d'huile selon la revendication 1, étant **caractérisé par le fait que** les parties en saillie de contact (2) sont dirigées de sorte que les faces inclinées respectives (3) sont tournées l'une faisant face à l'autre, de façon symétrique, la face inférieure étant dirigée au niveau du sommet du piston.

3. Segment racleur d'huile selon la revendication 1, étant **caractérisé par le fait que** les parties en saillie de contact (2) sont dirigées de sorte que les faces inclinées respectives (3) sont tournées dans le même sens, au niveau du sommet du piston.

4. Segment racleur d'huile selon l'une quelconque des revendications précédentes, **caractérisé par le fait qu'**il inclut une section intermédiaire (4) qui a des zones pour drainer l'huile sous la forme d'entailles ou trous oblongs (33) positionnés afin de rendre le flux de lubrifiant possible.

5. Segment racleur d'huile selon l'une quelconque des revendications 1 à 3, **caractérisé par le fait qu'**il inclut une section intermédiaire pleine (4), c'est-à-dire qui ne comporte pas d'entailles ou trous oblongs (33).

6. Segment racleur d'huile selon l'une quelconque des revendications précédentes, **caractérisé par le fait que** les parties en saillie de contact (2) sont créées au moyen de l'enlèvement de la matière depuis la région entre les deux.

7. Segment racleur d'huile selon l'une quelconque des revendications 1 à 5, **caractérisé par le fait que** les parties en saillie de contact (2) sont obtenues par l'utilisation en tant que forme alternative d'une bande préprofilée pour la fabrication du segment (1).

8. Segment racleur d'huile selon l'une quelconque des revendications précédentes, **caractérisé par le fait que** la face (102) est obtenue par l'utilisation de bande préprofilée pour la fabrication du segment (1).

9. Segment racleur d'huile selon l'une quelconque des revendications 1 à 7, **caractérisé par le fait que** chaque face (102) est obtenue par usinage ou processus similaire pour enlever de la matière en tirant la matière.

10. Segment racleur d'huile selon l'une quelconque des revendications précédentes, **caractérisé par le fait que** la surface externe du segment reçoit une application de revêtements afin d'augmenter la résistance à l'usure du segment (1).

11. Segment racleur d'huile selon l'une quelconque des revendications précédentes, **caractérisé par le fait que** la surface externe du segment reçoit un traitement superficiel afin d'augmenter la résistance à l'usure du segment (1).

12. Segment racleur d'huile selon l'une quelconque des revendications précédentes, **caractérisé par le fait que** le corps ferreux (12) a une hauteur totale (HT) supérieure à 2 millimètres (mm).
